# EUROPEAN PATENT APPLICATION

(11) **EP 4 635 296 A1**
(43) Date of publication of application: **22.10.2025**
(21) Application number: 23903180.0
(22) Date of filing: 14.11.2023
(51) Int. Cl.: A01N 1/02

(54) **ORGAN PERFUSION DEVICE**

(30) Priority: 13.12.2022 JP 2022198690
(71) Applicant: SHIMADZU CORPORATION, Kyoto-shi, Kyoto 604-8511 (JP); Kyoto University, Kyoto-shi, Kyoto 606-8501 (JP)
(72) Inventor: KUNIMITSU, Takeru, Kyoto-shi, Kyoto 604-8511 (JP); KASHIHARA, Minoru, Kyoto-shi, Kyoto 604-8511 (JP); HATA, Koichiro, Kyoto-shi, Kyoto 606-8501 (JP); TAJIMA, Tetsuya, Kyoto-shi, Kyoto 606-8501 (JP)
(74) Representative: Mewburn Ellis LLP
(86) International application number: PCT/JP2023/040846
(87) International publication number: WO 2024/127882

(57) **Abstract**

An organ perfusion machine (1) includes a chamber (100) that is open to an atmosphere and houses an organ, an inflow channel (220) that receives a perfusate to be sent to the organ, and an outflow channel (210) connectable, at one end, to an inlet blood vessel of the organ for sending the perfusate received by the inflow channel toward the inlet blood vessel. The chamber (100) includes a connecting port (120) configured to be openable and closable and configured to be connectable to the inflow channel (220). In the organ perfusion machine (1), a connector (401) of the inflow channel (220) which receives the perfusate is connected to the connecting port (120) to configure an open system circuit, and the connecting port is closed and a connector (402) of the inflow channel which receives the perfusate is connected to an outflow blood vessel of the organ to configure a closed system circuit.

## Description

### TECHNICAL FIELD

The present invention relates to an organ perfusion machine.

### BACKGROUND ART

An organ perfusion machine that perfuses an organ with a perfusate has been developed as an apparatus for harvesting an organ for transplant and preserving the organ while maintaining its function.

Organ perfusion is performed using either an open system circuit in which at least part of the circuit through which the perfusate circulates is open to the atmosphere, or a closed system circuit in which no part of the circuit through which the perfusate circulates is open to the atmosphere.

Japanese Patent Laying-Open No. 2020-002062 (PTL 1) discloses an organ perfusion machine in which one end of the inflow pipe is connected to the renal artery of the kidney and one end of the outflow pipe is connected to the renal vein of the kidney.

### CITATION LIST

### PATENT LITERATURE

PTL 1: Japanese Patent Laying-Open No. 2020-002062

### SUMMARY OF INVENTION

### TECHNICAL PROBLEM

An organ perfusion machine has conventionally been designed specifically for each circuit. Thus, a circuit available to the user of the organ perfusion machine has inevitably depended on the type of a handy organ perfusion machine.

However, the inventors have found that there are advantages and disadvantages to each of the open system circuit and the closed system circuit, and that there is a problem with available circuits depending on the type of the organ perfusion machine.

An object of the present disclosure is to provide an organ perfusion machine that allows the user of the organ perfusion machine to appropriately select between an open system circuit and a closed system circuit.

### SOLUTION TO PROBLEM

An organ perfusion machine of the present disclosure is an organ perfusion machine for perfusing an organ with a perfusate. The organ perfusion machine includes a chamber that is open to an atmosphere and houses the organ, an inflow channel connected to an inlet blood vessel of the organ, and one or more outflow channels fluidly connected to the inflow channel and disposed on an outlet blood vessel side of the organ. The chamber includes a connecting port that is openable and closable and is configured to be connectable to the one or more outflow channels. The one or more outflow channels are configured to be selectively connectable to one of the connecting port and the outflow blood vessel. In the organ perfusion machine, the one or more outflow channels are connected to the connecting port to configure an open system circuit, and the one or more outflow channels are connected to the outflow blood vessel to configure a closed system circuit.

### ADVANTAGEOUS EFFECTS OF INVENTION

According to the present disclosure, a user of the organ perfusion machine can appropriately select between an open system circuit and a closed system circuit.

### BRIEF DESCRIPTION OF DRAWINGS

Fig. 1 is a schematic diagram showing an overall configuration of an organ perfusion machine.
Fig. 2 is a schematic configuration diagram showing an overall configuration of the organ perfusion machine in which an open system circuit is configured.
Fig. 3 is a schematic configuration diagram showing an overall configuration of the organ perfusion machine in which a closed system circuit is configured.
Fig. 4 is a side view of a chamber.
Fig. 5 shows part of the closed system circuit.
Fig. 6 is a flowchart showing a refill method.

### DESCRIPTION OF EMBODIMENTS

An embodiment of the present disclosure will be described below in detail with reference to the drawings. The same or corresponding parts in the drawings have the same reference signs allotted, and description thereof will not be repeated.

### [Overall Configuration of Organ Perfusion Machine]

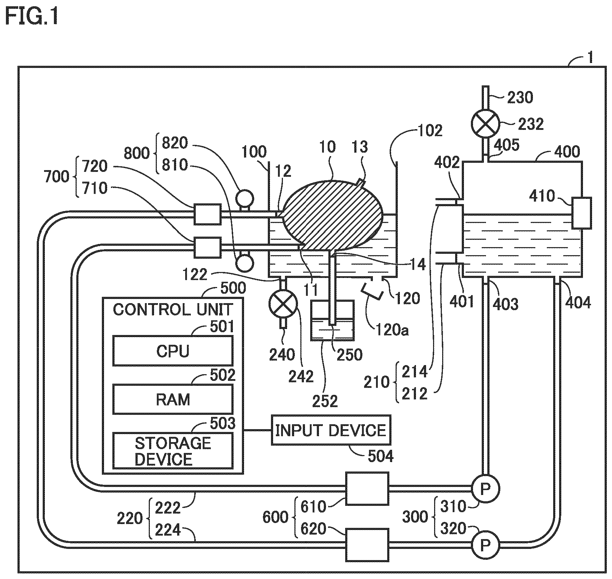

Fig. 1 is a schematic diagram showing an overall configuration of an organ perfusion machine 1. Organ perfusion machine 1 is an apparatus for flowing a perfusate to an organ harvested from a donor in order to preserve and/or evaluate the harvested organ. The "donor" may be a human or a non-human animal. The "organ" may be any organ that has an inlet blood vessel through which blood flows in and an outlet blood vessel through which blood flows out, such as heart, kidney, lung, pancreas, stomach, small intestine, large intestine, testis, ovary, or eyeball. The organ is only required to have one or more inlet blood vessels and one or more outlet blood vessels. In the present embodiment, description will be given by taking a liver 10, harvested from a human, as an example. The "perfusate" is selected as appropriate for the purpose of perfusion, and is, for example, a physiological saline, an organ preservation solution, blood, or the like.

Organ perfusion machine 1 includes a chamber 100 that receives a liver 10, an outflow channel 210 disposed on the outlet blood vessel side of liver 10, a reservoir 400 that stores a perfusate from outflow channel 210, and an inflow channel 220 connected to the inlet blood vessel of liver 10. Reservoir 400 is provided between outflow channel 210 and inflow channel 220, and two channels are fluidly connected though they are not directly connected.

Chamber 100 is a container that houses liver 10. The upper part of chamber 100 has an opening 102, and accordingly, the inside of chamber 100 is open to the atmosphere to be exposed to the air. Chamber 100 may further include a lid covering opening 102. Chamber 100 is only required to be open to the atmosphere of the space in which chamber 100 is placed. For example, when chamber 100 is placed in a nitrogen gas atmosphere, chamber 100 will be open to the nitrogen gas atmosphere.

Chamber 100 includes a connecting port 120 configured to be openable and closable and configured to be connectable to outflow channel 210. Connecting port 120 is configured to allow either a cap 120a or outflow channel 210 to be attached thereto.

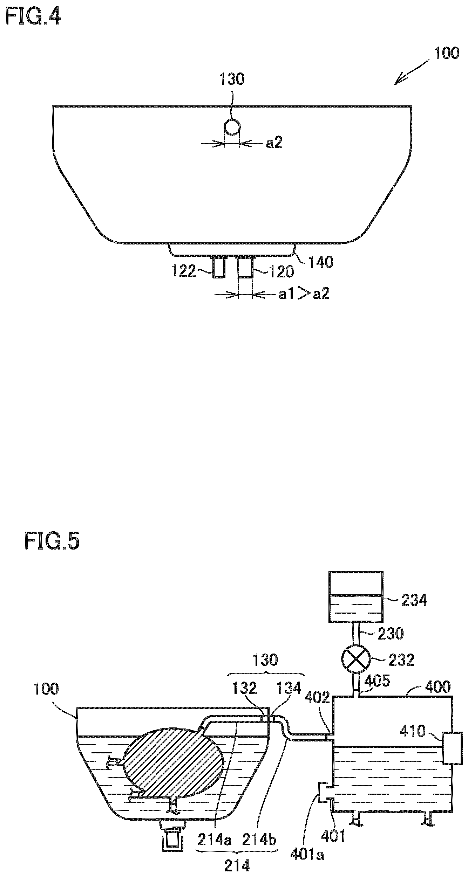

In addition, chamber 100 is connected with a waste fluid channel 240 for sending the perfusate in chamber 100 to a waste fluid tank (not shown). Waste fluid channel 240 includes a waste fluid valve 242 that opens and closes waste fluid channel 240. By opening waste fluid valve 242, the perfusate in chamber 100 can be sent through waste fluid channel 240 to the waste fluid tank. A detailed structure of chamber 100 will be described later with reference to Figs. 4 and 5.

Outflow channel 210 is a channel that receives the perfusate discharged from liver 10. Outflow channel 210 has one end configured to be connectable to reservoir 400 and the other end configured to be selectively connectable to one of connecting port 120 and a hepatic vein or IVC 13.

In the present embodiment, outflow channel 210 includes a first connecting channel 212 and a second connecting channel 214. First connecting channel 212 has one end configured to be connectable to a connector 401 formed in reservoir 400 and the other end configured to be connectable to connecting port 120. Second connecting channel 214 has one end configured to be connectable to a connector 402 formed in reservoir 400 and the other end configured to be connectable to hepatic vein or IVC 13.

Reservoir 400 is a container for storing the perfusate, which is a hermetically sealed container. Reservoir 400 is connected with outflow channel 210 and inflow channel 220. The perfusate sent from outflow channel 210 is sent to reservoir 400. The perfusate sent to reservoir 400 is sent from reservoir 400 through inflow channel 220 to liver 10.

Reservoir 400 includes a fluid level sensor 410 that measures the fluid level height of the perfusate in reservoir 400. Reservoir 400 is also connected with a refill channel 230. Refill channel 230 receives the perfusate to refill reservoir 400 and refills reservoir 400 with the perfusate. Refill channel 230 includes a refill valve 232 that opens and closes refill channel 230.

In the present embodiment, reservoir 400 includes at least five connectors 401 to 405. Connector 401 is configured to be connectable to first connecting channel 212. Connector 402 is configured to be connectable to second connecting channel 214. Connector 403 is configured to be connectable to a first inflow channel 222 of inflow channel 220. Connector 404 is configured to be connectable to a second inflow channel 224 of inflow channel 220. Connector 405 is configured to be connectable to refill channel 230.

Inflow channel 220 is a channel that is connected to the inlet blood vessel of liver 10, which is an organ, and sends the perfusate toward liver 10. Inflow channel 220 has one end connected to the inlet blood vessel of the organ and the other end connected to reservoir 400. Liver 10 has two inlet blood vessels, that is, a hepatic artery 11 and a portal vein 12. In the present embodiment, thus, inflow channel 220 includes first inflow channel 222 connected to hepatic artery 11 and second inflow channel 224 connected to portal vein 12. First inflow channel 222 is a channel connecting reservoir 400 to hepatic artery 11. Second inflow channel 224 is a channel connecting reservoir 400 to portal vein 12.

As first inflow channel 222 and second inflow channel 224 are connected to liver 10 in this manner, the perfusate in reservoir 400 is sent from hepatic artery 11 to liver 10 through first inflow channel 222 and from portal vein 12 to liver 10 through second inflow channel 224. The bile produced in liver 10 is sent from a bile channel 250 connected to a bile duct 14 to a container 252.

Organ perfusion machine 1 also includes a pump 300, a supply device 600, a flowmeter 700, and a pressure monitor 800.

Pump 300 is a device for sending the perfusate from reservoir 400 toward the inlet blood vessel, and is provided in inflow channel 220 in the present embodiment. As pump 300 is driven, the perfusate in reservoir 400 is sent to the inlet blood vessel through inflow channel 220. In the present embodiment, organ perfusion machine 1 includes a first pump 310 and a second pump 320 as pump 300. First pump 310 is a device for sending the perfusate from reservoir 400 toward hepatic artery 11, and is provided in first inflow channel 222. Second pump 320 is a device for sending the perfusate from reservoir 400 toward portal vein 12, and is provided in second inflow channel 224.

Supply device 600 supplies oxygen to the perfusate that is sent to the organ, and is provided in inflow channel 220 in the present embodiment. For example, supply device 600 is an oxygenator that supplies oxygen to the perfusate to increase the oxygen concentration in the perfusate. In the present embodiment, organ perfusion machine 1 includes a first supply device 610 and a second supply device 620 as supply device 600. First supply device 610 supplies oxygen to the perfusate flowing through first inflow channel 222 and is provided in first inflow channel 222. Second supply device 620 supplies oxygen to the perfusate flowing through second inflow channel 224 and is provided in second inflow channel 224.

Flowmeter 700 measures the flow rate of the perfusate flowing through inflow channel 220. In the present embodiment, organ perfusion machine 1 includes a first flowmeter 710 that measures the perfusate flowing through first inflow channel 222, and a second flowmeter 720 that measures the perfusate flowing through second inflow channel 224.

Pressure monitor 800 measures the pressure of the perfusate flowing through inflow channel 220. In the present embodiment, organ perfusion machine 1 includes, as pressure monitor 800, a first pressure monitor 810 that measures the pressure of the perfusate flowing through first inflow channel 222, and a second pressure monitor 820 that measures the pressure of the perfusate flowing through second inflow channel 224.

A controller 500 includes a central processing unit (CPU) 501, which is a computation unit, a random access memory (RAM) 502, and a storage device 503.

CPU 501 controls an operation of each part of organ perfusion machine 1 by reading and executing a program stored in storage device 503. For example, CPU 501 controls the pump by executing the program. The example shown in Fig. 1 illustrates a configuration including a single CPU 501, but organ perfusion machine 1 may include a plurality of CPUs.

Storage device 503 is implemented by a non-volatile storage device such as a read only memory (ROM) or a hard disk. Storage device 503 stores a program executed by CPU 501 or data used by CPU 501. The program may be stored in a non-transitory computer readable medium.

Controller 500 receives a measurement result from each of fluid level sensor 410, first flowmeter 710, second flowmeter 720, first pressure monitor 810, and second pressure monitor 820. Controller 500 controls opening and closing of refill valve 232 in accordance with the measurement result of fluid level sensor 410. Controller 500 controls first pump 310 in accordance with the measurement result of each of first flowmeter 710 and first pressure monitor 810, and controls second pump 320 in accordance with the measurement result of each of second flowmeter 720 and second pressure monitor 820.

In addition, controller 500 according to the present embodiment is connected with an input device 504 for inputting information that can identify whether the circuit assembled in organ perfusion machine 1 is an open system circuit or a closed system circuit. Input device 504 may, for example, accept input by a mechanical operation of a switch or the like. In addition, when controller 500 further includes a display device such as a liquid crystal display, input device 504 may be composed of a touch panel, a keyboard, a mouse, or the like.

### [Open System Circuit and Closed System Circuit]

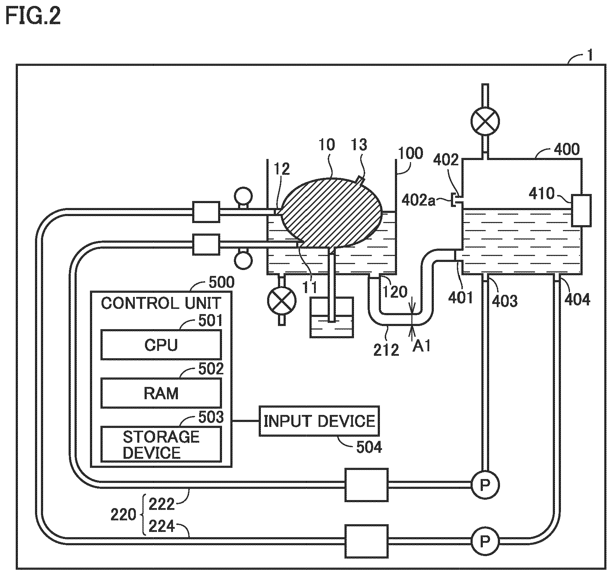

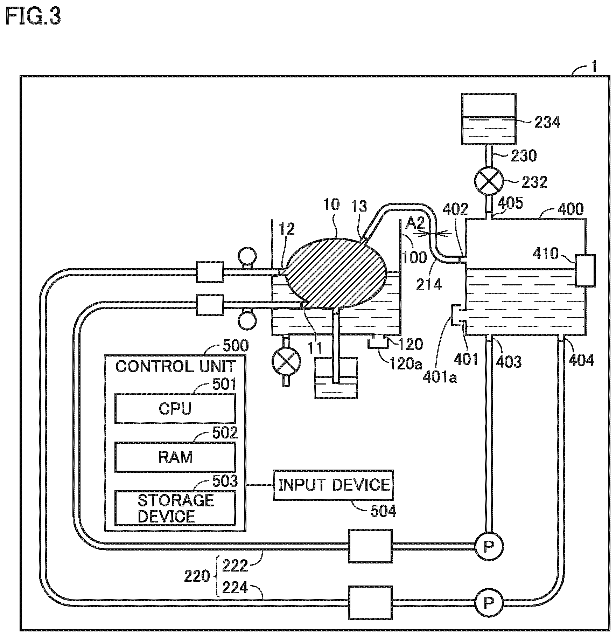

Organ perfusion machine 1 includes outflow channel 210 configured to be selectively connectable to one of connecting port 120 and hepatic vein or IVC 13, and chamber 100 having connecting port 120. In organ perfusion machine 1, an open system circuit is configured by connecting outflow channel 210 to connecting port 120, and a closed system circuit is configured by connecting outflow channel 210 to hepatic vein or IVC 13 of liver 10. The open system circuit and the closed system circuit will be described below with reference to Figs. 2 and 3.

Fig. 2 is a schematic configuration diagram showing an overall configuration of the organ perfusion machine in which the open system circuit is configured. Fig. 3 is a schematic configuration diagram showing an overall configuration of the organ perfusion machine in which the closed system circuit is configured. In Figs. 2 and 3, some of the reference signs are omitted for simplification of the figures.

### (Open System Circuit)

Referring to Fig. 2, an open system circuit is configured by connecting the end of outflow channel 210 which receives the perfusate to connecting port 120. More specifically, one end of first connecting channel 212 is connected to connector 401 formed in reservoir 400, and the other end of first connecting channel 212 is connected to connecting port 120. In addition, second connecting channel 214, which is not required in the open system circuit, does not need to be connected to connector 402. A cap 402a is attached to connector 402.

The perfusate in chamber 100 is sent from the connecting port through first connecting channel 212 to reservoir 400. The perfusate in reservoir 400 is sent from hepatic artery 11 or portal vein 12 to liver 10 through first inflow channel 222 and second inflow channel 224 in conjunction with driving of first pump 310 and second pump 320, respectively. The perfusate sent to liver 10 is released into the atmosphere from hepatic vein or IVC 13 to be discharged into chamber 100. The discharged perfusate is sent to liver 10 again through first connecting channel 212, reservoir 400, first inflow channel 222, and second inflow channel 224. The open system circuit is configured by connecting first connecting channel 212 to connecting port 120 in this manner.

### (Closed System Circuit)

Referring to Fig. 3, a closed system circuit is configured by connecting the end of outflow channel 210 which receives the perfusate to hepatic vein or IVC 13 and closing connecting port 120. More specifically, one end of second connecting channel 214 is connected to connector 402 formed in reservoir 400, and the other end of second connecting channel 214 is connected to hepatic vein or IVC 13. In addition, first connecting channel 212, which is not required in the closed system circuit, does not need to be connected to connector 401. A cap 401a is attached to connector 401.

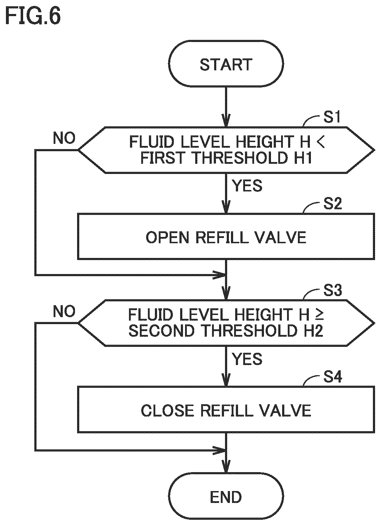

In addition, refill channel 230 is connected with an infusion bag 234, and refill valve 232 is opened and closed in accordance with the measurement result of fluid level sensor 410, and refill with the perfusate is performed from infusion bag 234. A detailed refill method will be described later with reference to Fig. 6.

The perfusate sent to the liver is discharged into reservoir 400 through second connecting channel 214 without being released to the atmosphere from hepatic vein or IVC 13. Because reservoir 400 is a hermitically sealed container, the perfusate is discharged into reservoir 400 without being released to the atmosphere. The perfusate in reservoir 400 is sent to liver 10 in conjunction with driving of each of first pump 310 and second pump 320, in the same way as in the open system circuit. The closed system circuit is configured by closing connecting port 120 and connecting second connecting channel 214 to hepatic vein or IVC 13 in this manner.

### (Advantages and Disadvantages to Open System Circuit and Closed System Circuit)

The open system circuit, in which hepatic vein or IVC 13 is open to the atmosphere, has a low risk of excessive pressure applied to inside of liver 10. Also, the administration of a reagent and the refill with the perfusate are only required to be performed directly from chamber 100 opened to the atmosphere, and thus, can be performed easily.

In the open system circuit, however, the perfusate that is returned to liver 10 is in contact with the atmosphere in chamber 100. This leads to a risk of contamination. In addition, the perfusate is discharged from hepatic vein or IVC 13 into chamber 100, and the perfusate discharged into chamber 100 is returned to liver 10, and accordingly, not only the channel but also chamber 100 needs to be filled with the perfusate. Thus, the open system circuit requires a large amount of perfusate.

Contrastingly, the closed system circuit, in which the perfusate is not in contact with the atmosphere, has a low risk of contamination. Also, since it is not necessary to fill chamber 100 with the perfusate used for perfusion, the total amount of perfusate used can be reduced, and accordingly, metabolites from liver 10 or the like can be analyzed easily in the closed system circuit.

In the closed system, however, since hepatic vein or IVC 13 is not open to the atmosphere, there is a risk of application of excessive pressure to inside of liver 10, or it is necessary to construct a control system that prevents application of excessive pressure. In addition, since the perfusate flows through the closed circuit, it is time-consuming to administer a reagent to the perfusate or refill with the perfusate.

As described above, the open system circuit and the closed system circuit each have advantages and disadvantages. As shown in Figs. 2 and 3, organ perfusion machine 1 according to the present embodiment can be used as either the open system circuit or the closed system circuit as chamber 100 is provided with openable and closable connecting port 120 configured to be connectable to inflow channel 220. Thus, the use of organ perfusion machine 1 according to the present embodiment enables a user such as a physician to appropriately select a circuit in accordance with, for example, the condition of the organ or the purpose of perfusion, while taking into account the advantages and disadvantages to each system.

### [Structure of Chamber]

A detailed structure of chamber 100 will be described with reference to Fig. 4. Fig. 4 is a side view of the chamber. Chamber 100 has a protrusion 140 formed on at least part of the bottom surface thereof, which protrudes outward opposite to the side on which liver 10 is housed.

Protrusion 140 has connecting port 120 and a waste fluid port 122. Both connecting port 120 and waste fluid port 122 are provided toward the outside of chamber 100 and have a tubular shape.

Chamber 100 has a tubular connector 130 provided to penetrate through the side surface thereof. Connector 130 provided in the side surface of the chamber will be described with reference to Fig. 5. Fig. 5 shows part of the closed system circuit. Some of the reference signs and illustration are omitted in Fig. 5 for simplification of the figure.

Referring to Fig. 5, connector 130 includes a first connecting portion 132 provided inwardly from the wall of chamber 100 and a second connecting portion 134 provided outward from the wall of chamber 100.

Second connecting channel 214 includes two channels 214a, 214b connected by connector 130. Channel 214a is a cannula having one end configured to be attachable to hepatic vein or IVC 13. The other end of channel 214a is connectable to first connecting portion 132 of connector 130. Channel 214b is connectable to second connecting portion 134 of connector 130 and connector 402 of reservoir 400.

As two channels 214a, 214b are connected via connector 130 in this manner, second connecting channel 214 is formed, and second connecting channel 214 can be attached to hepatic vein or IVC 13.

In the present embodiment, connecting port 120 is formed on the bottom surface of chamber 100. In the open system circuit, the perfusate is discharged directly from hepatic vein or IVC 13 into chamber 100. At this time, if hepatic vein or IVC 13 protrudes above the surface of the perfusate, the perfusate may bubble. In the present embodiment, by forming connecting port 120 on the bottom surface of chamber 100, bubbles can be prevented from entering the channel through connecting port 120, thus preventing the bubbles from entering liver 10.

Further, in the present embodiment, connecting port 120 is formed on protrusion 140 provided on the bottom of chamber 100. This can prevent liver 10 from coming into contact with connecting port 120, thus preventing damage to liver 10 due to the unevenness of connecting port 120 or the like, or prevent application of a suction pressure to liver 10 from first connecting channel 212 when connecting port 120 is blocked by liver 10.

In the present embodiment, a channel sectional area A1 of first connecting channel 212 for the open system circuit (see Fig. 2) is larger than a channel sectional area A2 of second connecting channel 214 for the closed system circuit (see Fig. 3). Therefore, an outer diameter a1 of connecting port 120 is larger than an outer diameter a2 of connector 130. For example, outer diameter a1 of connecting port 120 is 9 mm to 18 mm, and outer diameter a2 of connector 130 is 6 mm to 15 mm.

Increasing the channel sectional area of first connecting channel 212 can reduce a pressure loss in first connecting channel 212, and the perfusate in chamber 100 can be efficiently sent to reservoir 400 due to the atmospheric pressure applied to the perfusate in chamber 100.

### [Control During Use of Closed System Circuit]

If liver 10 is in poor condition, liver 10 may store the perfusate. In such a case, the balance between the amount of the perfusate sent to liver 10 and the amount of the perfusate discharged from liver 10 may be lost to reduce the perfusate in reservoir 400, and in the worst case, reservoir 400 may become empty. If pump 300 is driven with no perfusate in reservoir 400, air will enter liver 10.

When the open system circuit is assembled, refill with the perfusate can be performed easily from the top of chamber 100, but when the closed system circuit is assembled, refill with the perfusate cannot be refilled from chamber 100. In addition, reservoir 400, which is hermetically sealed, cannot be easily refilled with the perfusate. In the closed system circuit, further, the total amount of the perfusate flowing through the circuit is less than in the open system circuit, leading to a higher risk of reservoir 400 becoming empty than in the open system circuit.

When the closed system circuit is assembled, controller 500 according to the present embodiment monitors the fluid level height of reservoir 400 using fluid level sensor 410, and refills reservoir 400 with the perfusate when the fluid level height of reservoir 400 becomes less than a predetermined threshold.

Referring to Fig. 6, the refill method will be described. Fig. 6 is a flowchart showing the refill method. Each processing (step) shown in Fig. 6 is performed by controller 500, which is implemented by CPU 501 executing various programs stored in storage device 503.

Controller 500 determines whether the assembled circuit is the closed system circuit based on information input from input device 504. When determining that the assembled circuit is not the closed system circuit, in other words, when determining that the assembled circuit is the open system circuit, controller 500 does not perform the process shown in Fig. 6. When determining that the assembled circuit is the closed system circuit, controller 500 starts the process shown in Fig. 6. Controller 500 may automatically detect the assembled circuit. For example, a detector that can detect whether a channel is connected to each of connector 401 and connector 402 may be provided, and controller 500 may detect the circuit assembled based on the detection result of the detector. Controller 500 may start the process shown in Fig. 6 even when the open system circuit is assembled.

In step S1, controller 500 determines whether the fluid level height of reservoir 400 is less than a predetermined first threshold H1 based on the measurement result of fluid level sensor 410.

When determining that the fluid level height of reservoir 400 is not less than first threshold H1 (NO in step S1), in other words, when determining that the fluid level height of reservoir 400 is equal to or more than first threshold H1, controller 500 moves the process to step S3. When determining that the fluid level height of reservoir 400 is less than first threshold H1 (YES in step S1), controller 500 moves the process to step S2.

In step S2, controller 500 opens refill valve 232. This causes the perfusate to be refilled from infusion bag 234, which contains the perfusate, toward reservoir 400 through refill channel 230. Infusion bag 234 is, for example, disposed vertically above reservoir 400. This causes the perfusate to flow from infusion bag 234 toward reservoir 400 by gravity.

In step S3, controller 500 determines whether the fluid level height of reservoir 400 is equal to or more than a pre-determined second threshold H2 based on the measurement result of fluid level sensor 410. Second threshold H2 is set to a value greater than first threshold H1.

When determining that the fluid level height of reservoir 400 is not equal to or more than second threshold H2 (NO in step S3), in other words, when determining that the fluid level height of reservoir 400 is less than second threshold H2, controller 500 ends the process. When determining that the fluid level height of reservoir 400 is equal to or more than second threshold H2 (YES in step S3), controller 500 moves the process to step S4.

In step S4, controller 500 closes refill valve 232 and ends the process. Consequently, the refill of reservoir 400 with the perfusate from infusion bag 234 can be stopped.

Controller 500 performs the process shown in Fig. 6 in predetermined cycles. As a result, the fluid level height of the perfusate in reservoir 400 is maintained equal to or more than first threshold H1. This can prevent air from being sent to liver 10 due to reservoir 400 becoming empty. In addition, the fluid level height of the perfusate in reservoir 400 is maintained less than second threshold H2. As a result, the total amount of the perfusate used in the closed system circuit can be kept within a predetermined range.

### [Modifications]

In the above embodiment, the organ is liver 10. Since liver 10 has two inlet blood vessels, organ perfusion machine 1 includes first inlet channel 222 and second inlet channel 224 as inlet channel 220. Organ perfusion machine 1 includes one inflow channel when its target is an organ with only one inlet blood vessel, and includes three inflow channels when its target is an organ with three inlet blood vessels. In other words, it is only required to provide inflow channels in accordance with the number of inlet blood vessels of the target organ.

In addition, when the target is an organ with two outlet blood vessels, organ perfusion machine 1 is only required to include two second connecting channels 214 for the closed system circuit. In other words, the outflow channel (connecting channel) for the closed system circuit can be set in accordance with the number of outlet blood vessels of the target organ.

In the above embodiment, organ perfusion machine 1 includes first pump 310 for flowing the perfusate to first inflow channel 222 and second pump 320 for flowing the perfusate to second inflow channel 224. Organ perfusion machine 1 may also implement the functions of first pump 310 and second pump 320 with a single pump.

In the above embodiment, organ perfusion machine 1 includes reservoir 400. Organ perfusion machine 1 may not include reservoir 400. In this case, it is only required to connect outflow channel 210 to inflow channel 220 via a single channel. Any device or the like may be provided between outflow channel 210 and inflow channel 220 as long as outflow channel 210 and inflow channel 220 are fluidly connected to each other.

In the above embodiment, organ perfusion machine 1 forms connector 401 and connector 402 in reservoir 400 to increase the channel sectional area of the channel connected to connecting port 120, and uses first connecting channel 212 or second connecting channel 214 depending on the circuit. When the channel sectional area is common to the channel connected to connecting port 120 and the channel connected to hepatic vein or IVC 13, there is no need to use different channels depending on the circuit, and it is only required to provide one connector on the outflow channel 210 side formed in reservoir 400. In other words, in the above embodiment, outlet channel 210 is only required to be configured to be selectively connected to one of connecting port 120 and the outlet blood vessel, and it may be configured of one connecting channel.

In the above embodiment, reservoir 400 includes at least five connectors. Reservoir 400 is only required to include at least a connector for connecting outflow channel 210 to inflow channel 220, and is only required to include two or more connectors. The number of connectors included in reservoir 400 can be set in accordance with the number of channels that may be connected to reservoir 400, and is not limited to five.

### [Aspects]

A person skilled in the art will understand that the embodiment described above is a specific example of the following aspects.

(Clause 1) An organ perfusion machine according to an aspect is an organ perfusion machine for perfusing an organ with a perfusate. The organ perfusion machine includes a chamber that is open to an atmosphere and houses the organ, an inflow channel connected to an inlet blood vessel of the organ, and one or more outflow channels fluidly connected to the inflow channel and disposed on an outlet blood vessel side of the organ. The chamber includes a connecting port that is openable and closable and is configured to be connectable to the one or more outflow channels. The one or more outflow channels are configured to be selectively connectable to one of the connecting port and the outflow blood vessel. In the organ perfusion machine, the one or more outflow channels are connected to the connecting port to configure an open system circuit, and the one or more outflow channels are connected to the outflow blood vessel to configure a closed system circuit.

The organ perfusion machine according to clause 1 allows the user of the organ perfusion machine to appropriately select the open system circuit and the closed system circuit.

(Clause 2) In the organ perfusion machine according to clause 1, the connecting port is provided on a bottom of the chamber.

The organ perfusion machine according to clause 2 can prevent, when the open system circuit is configured, bubbles from entering the channel through the connecting port to prevent the bubbles from entering the organ, even if the perfusate, discharged through the outflow blood vessel, bubbles when being directly discharged into the chamber.

(Clause 3) In the organ perfusion machine according to clause 2, the chamber includes a protrusion provided on a bottom surface thereof and protruding outward opposite to a side of the chamber on which the organ is received. The connecting port is provided on the protrusion.

The organ perfusion machine according to clause 3 can prevent damage to the organ due to, for example, the unevenness of the connecting port and prevent application of a suction pressure from the inflow channel to the organ when the connecting port is blocked by the organ.

(Clause 4) The organ perfusion machine according to any one of clauses 1 to 3 further incudes a reservoir that stores the perfusate. The one or more outflow channels include a first channel connected to the reservoir and selectively connected to the connecting port to configure the open system circuit, and a second channel connected to the reservoir and selectively connected to the outflow blood vessel to configure the closed system circuit. The first channel has a channel sectional area larger than a channel sectional area of the second channel.

The organ perfusion machine according to clause 4 can have an increased channel sectional area of the first connecting channel to reduce a pressure loss, and when the open system circuit is configured, efficiently send the perfusate in the chamber to the reservoir due to the atmospheric pressure applied to the perfusate in the chamber.

(Clause 5) The organ perfusion machine according to clause 4 further includes a refill channel that is connected to the reservoir and receives the perfusate to refill the reservoir, a valve that opens or closes the refill channel, a fluid level sensor that measures a fluid level height of the perfusate in the reservoir, and a controller. The controller performs refill control of opening the valve to refill the reservoir with the perfusate when the fluid level height is less than a first threshold.

The organ perfusion machine according to clause 5 can prevent the air from being sent to the organ due to the reservoir becoming empty.

(Clause 6) In the organ perfusion machine according to clause 5, the controller performs the refill control when the closed system circuit is used.

The organ perfusion machine according to clause 6 has a smaller total amount of the perfusate flowing through the circuit than that of the open system circuit and performs the refill control in the closed system circuit with a high risk of empty reservoir, and thus, can have a reduced risk of the reservoir becoming empty.

It should be understood that the embodiment disclosed herein is illustrative and non-restrictive in every respect. The scope of the present invention is defined by the terms of the claims rather than the description above and is intended to include any modifications within the scope and meaning equivalent to the terms of the claims.

### REFERENCE SIGNS LIST

1 organ perfusion machine; 10 liver; 11 hepatic artery; 12 portal vein; 13 hepatic vein or IVC; 14 bile duct; 100 chamber; 102 opening; 120 connecting port; 120a, 401a, 402a cap; 122 waste fluid port; 130, 401 to 405 connector; 132 first connecting portion; 134 second connecting portion; 140 protrusion; 210 outflow channel; 212 first connecting channel; 214 second connecting channel; 220 inflow channel; 222 first inflow channel; 224 second inflow channel; 230 refill channel; 232 refill valve; 234 infusion bag; 240 waste fluid channel; 242 waste fluid valve; 250 bile channel; 252 container; 300 pump; 310 first pump; 320 second pump; 400 reservoir; 410 fluid level sensor; 500 controller; 503 storage device; 504 input device; 600 supply device; 610 first supply device; 620 second supply device; 700 flowmeter; 710 first flowmeter; 720 second flowmeter; 800 pressure monitor; 810 first pressure monitor; 820 second pressure monitor.

## Claims

1. An organ perfusion machine for perfusing an organ with a perfusate, the organ perfusion machine comprising:
a chamber that is open to an atmosphere and houses the organ;
an inflow channel connected to an inlet blood vessel of the organ; and
one or more outflow channels fluidly connected to the inflow channel and disposed on an outlet blood vessel side of the organ, wherein
the chamber includes a connecting port that is openable and closable, the connecting port being connectable to the one or more outflow channels,
the one or more outflow channels are configured to be selectively connectable to one of the connecting port and the outflow blood vessel,
the one or more outflow channels are connected to the connecting port to configure an open system circuit, and
the one or more outflow channels are connected to the outflow blood vessel to configure a closed system circuit.

2. The organ perfusion machine according to claim 1, wherein the connecting port is provided on a bottom of the chamber.

3. The organ perfusion machine according to claim 2, wherein
the chamber includes a protrusion provided on a bottom surface thereof and protruding outward opposite to a side of the chamber on which the organ is received, and
the connecting port is provided on the protrusion.

4. The organ perfusion machine according to claim 1, further comprising a reservoir that stores the perfusate, wherein
the one or more outflow channels include
a first channel connected to the reservoir and selectively connected to the connecting port to configure the open system circuit, and
a second channel connected to the reservoir and selectively connected to the outflow blood vessel to configure the closed system circuit, and
the first channel has a channel sectional area larger than a channel sectional area of the second channel.

5. The organ perfusion machine according to claim 4, further comprising:
a refill channel that is connected to the reservoir and receives the perfusate to refill the reservoir;
a valve that opens or closes the refill channel;
a fluid level sensor that measures a fluid level height of the perfusate in the reservoir; and
a controller,
wherein the controller performs refill control of opening the valve to refill the reservoir with the perfusate when the fluid level height is less than a first threshold.

6. The organ perfusion machine according to claim 5, wherein the controller performs the refill control when the closed system circuit is used.
